(19) Europäisches Patentamt
European Patent Office
Office européen des brevets

(11) **EP 4 072 192 A1**

(12) **EUROPEAN PATENT APPLICATION**

(43) Date of publication:
**12.10.2022 Bulletin 2022/41**

(21) Application number: **21218503.7**

(22) Date of filing: **31.12.2021**

(51) International Patent Classification (IPC):
*H04W 28/08* (2009.01)    *H04W 36/00* (2009.01)

(52) Cooperative Patent Classification (CPC):
**H04W 28/0808; H04W 36/0058; H04W 36/00835; H04W 36/00837**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020 US 202017138963**

(71) Applicant: **Sterlite Technologies Limited
122002 Gurgaon, Haryana (IN)**

(72) Inventors:
• **PAREKH, Shyam
94563 Orinda (US)**
• **TANG, Kevin
94568 Dublin (US)**
• **RAVINDRAN, Ravishankar
94582 San Ramon (US)**

(74) Representative: **Hepworth Browne
15 St. Pauls Street
Leeds LS1 2JG (GB)**

(54) **METHOD AND APPARATUS FOR UPDATING HANDOVER PARAMETERS IN OPEN-RADIO ACCESS NETWORK (O-RAN) ENVIRONMENT**

(57) The present disclosure relates an apparatus and a method for identifying handover requirements by a Radio access network (RAN) controller (302) in an open RAN (O-RAN) environment (200). Particularly, the O-RAN environment (200) comprises a RAN controller (302) to control via an E2 node a plurality of user equipment (UEs) (110) positioned in a serving cell (104). The method includes parallel execution of the operations performed by the RAN controller (302) for each serving cell and each of the neighbor cell (106a, 106b... 106n) and updating CIOs with repeated comparing of the serving cell load parameter with each of the plurality of neighbour cell and updating the handover parameters based on the comparison.

Fig. 5

## Description

## TECHNICAL FIELD

Embodiments of the present disclosure relate to the field of wireless communication networks, and more particularly, relates to an apparatus for updating handover parameters in an open-Radio Access Network (O-RAN) environment for load balancing and a method thereof.

## Background Art

Wireless communication systems are rapidly growing in usage. In recent years, wireless devices such as smartphones and tablet computers have become increasingly sophisticated. In addition to supporting telephone calls, many mobile devices now provide access to the internet, email, text messaging, and navigation using the global positioning system (GPS), and are capable of operating sophisticated applications that utilize these functionalities.

As an example, a wireless multiple access communication system may include several base stations, each simultaneously supporting communication for multiple communication devices, otherwise known as user equipment (UE). The base station may communicate with the UE on the downlink channel (eg, for transmission from the base station to the UE) and the uplink channel (eg, for transmission from the UE to the base station).

As a location of a user equipment (UE) is moved from a service area defined by "X" cell into that defined by "Y" cell, the UE must disconnect with "X" base station and connect with "Y" base station (i.e., establish a new connection). This operation is sometimes known as handover (HO) or a cell reselection. The user equipment device (UE) may communicate using different radio access technologies (e.g., different cellular RATs and/or WLANs) at different times. In various situations, the UE and/or the network may initiate handover between different wireless technologies based on various criteria. For example, consider a situation in which a UE is being used for a voice over LTE (VoLTE) phone call outside a residence and the user steps inside. At this point, the signal strength of the LTE connection may drop (e.g., because of the roof and walls of the residence) and the signal strength of a Wi-Fi connection may increase (e.g., because the user is closer to a Wi-Fi access point). In response, the UE may initiate a handover from VoLTE to Wi-Fi while the network may initiate a handover from VoLTE to another cellular RAT (e.g., a circuit-switched cellular RAT).

One important operation while performing the HO, for example, is that the UE requires to monitor signalling strength values of "Y" cells that is neighbour to the "X" cell to which the UE is connected thereto, (i.e., "serving cell"). More particularly, the HO operation involves comparing the monitored signalling strength values of the neighbour cells (the "Y" cells) with a signalling strength value of the serving cell (the "X" cell). In case, if the signalling strength value of the neighbour cell is considered by the UE to be stronger than that of the serving cell, the UE initiates the HO to the neighbour cell, which becomes the new serving cell.

Japanese Patent Application No. JP6485565B2 titled "User equipment and method" discloses a mobile communication device for providing a measurement report to a communication network comprising a plurality of cells.

European Patent Application No. EP2420084B1 titled "System and method for supporting handovers between different radio access technologies of a wireless communications system" discloses a system and method for supporting handovers between different radio access technologies (RATs).

US Patent Application No. US8509776B2 titled "Network initiated proactive handover procedure for fast moving wireless devices" discloses a method for initiating a handover scanning procedure on a wireless device.

US Patent Application No. US8830964B2 titled "Mobile network handover initiation" discloses a method and a system to monitor wireless signal strengths associated with wireless access points and to initiate a handover procedure upon one or more thresholds.

Albeit the need of HO, the unnecessarily switching of the serving cell and in case of switching to a loaded cell, in both these cases, there exists wastage of radio resources and decrease in system efficiency. Hence, in order to effectively manage the HO operation, it is vital to monitor the parameters constituting the HO in consideration with load balancing of the cells. The parameters may include, but not limited to, signal strength (RSRP/RSRQ), cell load values, cell individual offset (CIO), hysteresis loss, and the like. Especially, considering the current expansion in the wireless communication networks are becoming increasingly complex and due to introduction of new standards and protocols (such as 5G standards), the monitoring of these parameters in order to effectively utilize the radio resources, is at utmost priority.

One existing technique for providing a resource efficient approach for managing the aforementioned parameters, to provide cell load optimization and further to provide Quality of Experience (QoE) for the users in mobile state is a mobility robustness optimization technique such as a self-organizing network (SON). The SON is a collection of functions that automatically monitors network operations (such as congestions), parameters (such as handover parameters) and automatically takes actions to optimize network operations. Although automatically driven, the intellectualization in the SON is limited. That is, the SON operations are performed on an individual cell basis i.e., considering the availability or cell load values or cell received power. Further, the SON operations are not real-time.

Accordingly, the present disclosure seeks to ameliorate one or more of the aforementioned disadvantages or provide a useful alternative. Thus, the present disclosure provides apparatus for updating handover parameters in an open-Radio Access Network (O-RAN) environment for load balancing.

## SUMMARY OF THE disclosure

Embodiments of the present disclosure provide a method for identifying handover requirements by a Radio access network (RAN) controller in an open-RAN (O-RAN) environment. In particular, the O-RAN environment has a virtualized network architecture having at least one RAN controller. Moreover, the RAN controller is connected with a plurality of E2 nodes. The plurality of E2 nodes are connected with at least one user equipment (UEs) positioned in a serving cell. Furthermore, the serving cell covers a location for serving a UE. Further, the serving cell is adjacent to a plurality of neighbour cells.

According to a first aspect, the method for identifying handover requirement by the Radio access network (RAN) controller in the open-RAN (O-RAN) environment comprises the steps of periodically obtaining a serving cell load parameter and a plurality of neighbour cell load parameters, periodically comparing the serving cell load parameter with each of the plurality of neighbour cell load parameters of each of a neighbour cell from the plurality of neighbour cells, periodically calculating serving cell handover parameter and a plurality of neighbour cell handover parameters of each of the neighbour cell from the plurality of neighbour cells, dynamically updating the serving cell handover parameter and the plurality of neighbour cell handover parameters based on the comparison, and determining if handover is required by the UE to one of the neighbour cells from the plurality of neighbour cells based on updated serving cell handover parameter and the plurality of neighbour cell handover parameters. In particular, both the serving cell load parameter and the plurality of neighbour cell load parameters indicates a plurality of cell load parameters. Moreover, the steps of both periodically comparing the serving cell load parameter with each of the plurality of neighbour cell load parameters and dynamically updating the serving cell handover parameter and the plurality of neighbour cell handover parameters, are executed parallelly on each of a neighbour cell.

In accordance with an embodiment of the present disclosure, the serving cell and neighbor cell load parameters correspond to average load values of the serving cell and neighbor cell.

In accordance with an embodiment of the present disclosure, the determination if the handover is required by the UE in the serving cell is made by comparing the serving cell load parameter with a predefined threshold, and determining that the handover is not required if the serving cell handover parameter is less than the predefined threshold.

In accordance with an embodiment of the present disclosure, the determination if the handover is required by the UE in the serving cell is made by comparing if the serving cell load parameter is greater than each of the plurality of neighbour cell handover parameters, and determining that the handover is not required if the serving cell load parameter is less than each of the plurality of neighbour cell handover parameters.

In the proposed method, the determination if the handover is required by the UE in the serving cell includes checking at the UE if a predefined handover inequality is satisfied for a specific interval of time. In particular, the predefined handover inequality is RSRPt > RSRPs + (Hs - CIOs,t).

According to a second aspect, dynamically updating the serving cell handover parameter and the plurality of neighbour cell handover parameters further comprises the steps of changing a serving cell CIO with respect to each of a neighbour cell, and changing the neighbour cell CIO with respect to the serving cell. In particular, a CIO value is used for determining the handover trigger for the UE from the serving cell to each of the neighbour cells.

According to a third aspect, the method for identifying handover requirement by the Radio access network (RAN) controller in the open-RAN (O-RAN) environment further comprises the steps of receiving the serving cell load value and the neighbour cell load value for each of the plurality of neighbour cells from a radio network information base (RNIB). In particular, the RNIB stores load values of the serving cell and each of the neighbour cells. Moreover, the load value comprises a physical resource block (PRB) utilization value.

According to the fourth aspect of the disclosure, dynamically updating the serving cell handover parameter and the plurality of neighbour cell handover parameters further comprises the steps of in response to periodically comparing the serving cell load parameter with each of the plurality of neighbour cell load parameters, repeatedly updating a cell individual offset (CIO) value of the serving cell and a CIO value of each of the neighbour cell, and parallely executing said steps of periodically obtaining, periodically comparing, periodically calculating, dynamically updating and determining of the handover requirement. In particular, the determining of the handover requirement further comprises the steps of determining the updated CIO value of each serving cell with respect to each of the neighbour cells. Moreover, the CIO value is used for determining the handover trigger for the UE from the serving cell to each of the neighbour cells.

According to the fourth aspect of the disclosure, the method for identifying handover requirements by the Radio access network (RAN) controller in the open-RAN (O-RAN) environment further comprises the steps of transmitting a plurality of handover parameters to the serving E2 node. In particular, the serving E2 node is connected to the UE. Moreover, the handover parameters are transmitted at a second predefined time interval, wherein both the serving cell handover parameter and the plurality of neighbour cell handover parameters indicates the plurality of handover parameters.

In accordance with an embodiment of the present disclosure, the steps of periodically obtaining, periodically comparing, periodically calculating, dynamically updating and determining of the handover requirement are repeated after a first predefined time interval.

In accordance with an embodiment of the present disclosure, the method for identifying handover requirements provides a mobile load balancing (MLB).

According to the fifth aspect of the disclosure, a Radio access network (RAN) controller for identifying handover requirements in an open RAN (O-RAN) environment. In particular, the O-RAN environment has a virtualized network architecture having at least one RAN controller. Moreover, the RAN controller is connected with a plurality of E2 nodes. Furthermore, the plurality of E2 nodes are connected with a plurality of user equipment (UEs) positioned in a serving cell. Furthermore, the serving cell covers a location for serving the UE. Further, the serving cell is adjacent to a plurality of neighbour cells.

In accordance with an embodiment of the present disclosure, the RAN controller configured to perform the steps of periodically obtaining a serving cell load parameter and a plurality of neighbour cell load parameters, periodically comparing the serving cell load parameter with each of the plurality of neighbour cell load parameters, of each of a neighbour cell from the plurality of neighbour cells, periodically calculating serving cell handover parameter and a plurality of neighbour cell handover parameters of each of the neighbour cell from the plurality of neighbour cells, dynamically updating the serving cell handover parameter and the plurality of neighbour cell handover parameters based on the comparison, and determine if handover is required by the UE to one of the neighbour cells from the plurality of neighbour cells based on updated serving cell handover parameter and the plurality of neighbour cell handover parameters. In particular, both the serving cell load parameter and the plurality of neighbour cell load parameters indicates a plurality of cell load parameters. Moreover, the steps of both periodically comparing the serving cell load parameter with each of the plurality of neighbour cell load parameters and dynamically updating the serving cell handover parameter and the plurality of neighbour cell handover parameters, are executed parallelly on each of a neighbour cell.

In accordance with an embodiment of the present disclosure, the RAN controller configured to provide the updated serving cell handover parameter and the plurality of neighbour cell handover parameters to the UE, is further configured to determine, via the UE, if the handover is required by the UE in the serving cell comprising the steps of comparing the serving cell load parameter with a first predefined threshold, and determining that the handover is not required if the serving cell handover parameter is less than the first predefined threshold.

In accordance with an embodiment of the present disclosure, the RAN controller configured to provide the updated serving cell handover parameter and the plurality of neighbour cell handover parameters to the UE, is further configured to determine, via the UE, if the handover is required by the UE in the serving cell comprising the steps of comparing if the serving cell load parameter is greater than each of the plurality of neighbour cell handover parameters, and determining that the handover is not required if the serving cell load parameter is less than each of the plurality of neighbour cell handover parameters.

In accordance with an embodiment of the present disclosure, the RAN controller is configured to dynamically update the serving cell handover parameter and the plurality of neighbour cell handover parameters comprising the steps of changing a serving cell CIO with respect to each of a neighbour cell, and changing the neighbour cell CIO with respect to the serving cell. In particular, a CIO value is used for determining the handover trigger for the UE from the serving cell to each of the neighbour cell.

In accordance with an embodiment of the present disclosure, the RAN controller is configured to receive the serving cell load value and the neighbour cell load value for each of the plurality of neighbour cells from a radio network information base (RNIB). In particular, the RNIB stores load values of the serving cell and each of the neighbour cells. Moreover, the load value comprises a physical resource block (PRB) utilization value.

In accordance with an embodiment of the present disclosure, the RAN controller is configured to transmit a plurality of handover parameters to the serving E2 node. In particular, the handover parameters are transmitted at a second predefined time interval. Moreover, both the serving cell handover parameter and the plurality of neighbour cell handover parameters indicates the plurality of handover parameters.

In accordance with an embodiment of the present disclosure, the steps of periodically obtaining, periodically comparing, periodically calculating, dynamically updating and determining of the handover requirement are repeated after a first predefined time duration.

The foregoing objectives of the present disclosure are attained by employing a method for updating handover parameters in open-Radio Access Network (O-RAN) environment.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial diagram illustrating a wireless communication system, in accordance with an embodiment of the present disclosure;

Fig. 2 is a block diagram illustrating an overview of an Open-Radio Access Network (O-RAN) architecture in conjunction with the wireless network in accordance with an embodiment of the present disclosure;

Fig. 3 is a block diagram illustrating various hardware elements in a RAN in accordance with an embodiment of the present disclosure;

Fig. 4 is a block diagram illustrating various hardware elements in a RAN controller in accordance with an embodiment of the present disclosure;

Fig. 5 illustrates a flow chart for identifying the target cell for handover in the open RAN (O-RAN) environment in accordance with an embodiment of the present disclosure;

Fig. 6 illustrates a flowchart for identifying the target cell for handover in the open RAN (O-RAN) environment in accordance with an embodiment of the present disclosure.

## REFERENCE LIST

Wireless communication network - 100
E2 node - 102, 108a, 108b
Serving cell - 104
Neighbour cells - 106a, 106b,... 106n
User Equipment (UE) - 110
Open-Radio Access Network (O-RAN) environment - 200
Service Management and Orchestration (SMO) framework - 202
Non-real-time-radio intelligent controller (Non-RT-RIC) - 204
Near-real-time-radio intelligent controller (Near-RT-RIC) - 206
Radio access network (RAN) - 208
Radio access network (RAN) intelligent controller (RIC) - 210
Radio access network (RAN) controller - 302
Communication unit - 304
Memory unit - 306
Receiving unit - 402
Comparator unit - 404
Handover (HO) management unit - 406
Radio network information base (RNIB) - 408

The apparatus and method illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". [0052] Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**

The term radio access network (RAN) means a part of a telecommunications system which connects individual devices to other parts of a network through radio connections. A RAN provides a connection of user equipment such as mobile phone or computer with the core network of the telecommunication systems. A RAN is an essential part of the access layer in the telecommunication systems which utilize base stations (such as e node B , g node B) for establishing radio connections.

The term wireless communication system means various network components connected via wireless networks. The wireless networks consist of any wireless connectivity technology such as radio links, millimeter wave, etc. In this document, the wireless communication system includes one or more controllers connected with radio access networks, further connected with a plurality of user equipments.

The term New RAN means a Radio Access Network that supports either NR/E-UTRA or both and has capabilities to interface with Next Generation Core Network (NG-CN). NG-C/U is a Control/User Plane interface towards NG-CN.

The term gNB means a New Radio (NR) Base stations having the capability to interface with 5G Core named as NG-CN over NG-C/U (NG2/NG3) interface as well as 4G Core known as Evolved Packet Core (EPC) over S1-C/U interface.

The term LTE eNB means an evolved eNodeB that can support connectivity to EPC as well as NG-CN.

The term Non-standalone NR means a 5G Network deployment configuration, where a gNB needs an LTE eNodeB as an anchor for control plane connectivity to 4G EPC or LTE eNB as anchor for control plane connectivity to NG-CN.

The term Standalone NR means a 5G Network deployment configuration where gNB does not need any assistance for connectivity to core Network, it can connect by its own to NG-CN over NG2 and NG3 interfaces.

The term Non-standalone E-UTRA means a 5G Network deployment configuration where the LTE eNB requires a gNB as anchor for control plane connectivity to NG-CN.

The term Standalone E-UTRA means a typical 4G network deployment where a 4G LTE eNB connects to EPC.

The term Xn Interface means a logical interface which interconnects the New RAN nodes i.e. it interconnects gNB to gNB and LTE eNB to gNB and vice versa.

The term near real time RAN Intelligent Controller (near RT RIC) as per the O-RAN Alliance (O-RAN-WG1 OAM Architecture-v02.00 means a logical function that enables near-real-time control and optimization of O-RAN elements and resources via fine-grained data collection and actions over E2 interface.

The term Non-Real Time Radio Intelligent Controller (non RT RIC) means a logical function that enables non-real-time control and optimization of RAN elements and resources, AI/ML workflow including model training and updates, and policy based guidance of applications/features in near-RT RIC. In particular, the Non-Real Time Radio Intelligent Controller (non RT RIC) is a part of the Service Management & Orchestration Framework and communicates to the near-RT RIC using the A1 interface. Moreover, the Non-RT control functionality (> 1s) and the near-Real Time (near-RT) control functions (< 1s) are decoupled in the RIC. Furthermore, the Non-RT functions include service and policy management, RAN analytics and model-training for some of the near-RT RIC functionality, and non-RT RIC optimization.

The term O-CU means an O-RAN Central Unit which is a logical node hosting RRC, SDAP and PDCP protocols.

The term O-CU-CP means an O-RAN Central Unit - Control Plane which is a logical node hosting the RRC and the control plane part of the PDCP protocol.

The term O-CU-UP means an O-RAN Central Unit - User Plane which is a logical node hosting the user plane part of the PDCP protocol and the SDAP protocol.

The term O-DU means an O-RAN Distributed Unit which is a logical node hosting RLC/MAC/High-PHY layers based on a lower layer functional split.

The term O-RU means an O-RAN Radio Unit which is a logical node hosting Low-PHY layer and RF processing based on a lower layer functional split. This is similar to 3GPP's "TRP" or "RRH" but more specific in including the Low-PHY layer (FFT/iFFT, PRACH extraction).

The term O1 interface means an interface between management entities in Service Management and Orchestration Framework and O-RAN managed elements, for operation and management, by which FCAPS management, Software management, File management shall be achieved.

The term xAPP means an independent software plug-in to the Near-RT RIC platform to provide functional extensibility to the RAN by third parties. In particular, the near-RT RIC controller can be provided with different functionalities by using programmable modules as xAPPs, from different operators and vendors.

The term A1 interface means an interface between non-RT RIC and Near-RT RIC to enable policy-driven guidance of Near-RT RIC applications/functions, and support AI/ML workflow. In particular, the data packets communicated over the A1 interface are called A1 messages.

The term E2 interface means an interface connecting the Near-RT RIC and one or more O-CU-CPs, one or more O-CU-UPs, and one or more O-DUs. In particular, the data packets communicated over the E2 interface are called E2 messages.

The term Reference signal received power (RSRP), as per 3GPP ETSI TS 136 214 V9.1.0 (2010-04) technical specification, means the linear average over the power contributions (in [W]) of the resource elements that carry cell-specific reference signals within the considered measurement frequency bandwidth. In particular, the RSRP is the power of the LTE Reference Signals spread over the full bandwidth and narrowband.

The term User Equipment (UE) (108) means a mobile telephone (108) changing the serving cell (104).

The terms node/eNodeB/gNB and nodes/eNodesB/gNBs means the network BS (106) serving as a source.

The term target node/eNodeB/gNB/BS means the eNodeB/gNB (106a), eNodeB/gNB (106b) and eNodeB/gNB (106c..106n) serving as candidate nodes for a target/neighbour cells (104a-c).

Terms "network node", "serving node", "serving network node", "serving BS" and "serving eNB" are interchangeably used.

The network-controlled handover may be described below achieves a desired technical effect of improved HO mechanism.

Terms "neighbour cells" and "a plurality of neighbour cells" are interchangeably used.

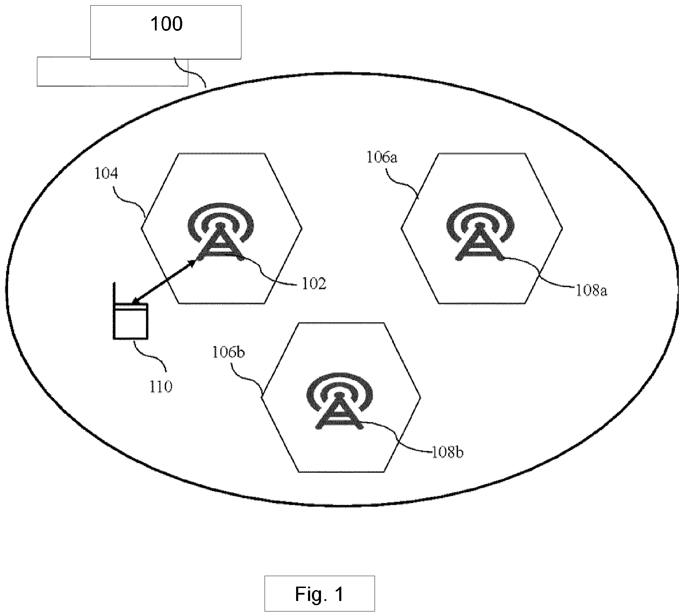

Fig. 1 is a pictorial diagram illustrating a wireless communication network, in accordance with an embodiment of the present disclosure. The wireless communication network (100) comprises a base station (102) supporting an associated serving cell (104) and a plurality of neighbour cells (106a, 106b... 106n) associated to respective neighbour base stations (108a, 108b... 108n). A user equipment (UE) (110) is located within the serving cell (104) and is supported by the base station (102) ("serving base station").

The base station (102) (may include, for example, an access node such as e.g. a Radio Base Station (RBS), evolved Node B ("eNB"), "eNodeB", "NodeB", "B node", gNB, or BTS (Base Transceiver Station). Particularly, the base station (102) is a logical node that handles transmission and reception of signals associated with either the serving cell (104) and the neighbour cells (106a-b). Moreover, the serving cell (104) and the neighbour cells (106a, 106b... 106n) connect to each other via the "Xn/X2" interface. Further, the base station (102) and the neighbour base stations (108a, 108b... 108n) connect to one or more antennas. Thus respective base stations may be responsible for the serving cell (104) and the neighbour cells (106a, 106b... 106n).

Each of the base stations (102 and 108a, 108b... 108n) further communicate with a core network (not shown) comprising an evolved packet core (EPC) using an "S1" interface. Particularly, the base stations (102 and 108a, 108b... 108n) communicate with a Mobility Management Entity (MME) and a User plane entity (UPE) identified as Serving Gateway (S-GW) using S1-C and S1-U for control plane and user plane, respectively. Alternatively, the core network corresponds to a 5G core.

The base station (102) adapt a triggering threshold, e.g. s-measure, for cell re-selection measurements by the UE (110) in the wireless communication network (100). The "cell re-selection" is cell change through handover, i.e. cell change when performing handover and "cell re-selection measurements" is the measurements for handover during the CONNECTED mode. Particularly, the cell re-selection measurements are used by the base station (102) to perform a handover (HO) to transfer a session of the UE (110) to one of the neighbour cells (106a, 106b... 106n).

In accordance with an embodiment of the present disclosure, the network configures the UE (110) to perform measurements and send measurement reports when certain measurement criteria are met. Based on the measurement reports, the UE (110) is moved, if required and possible, to the most appropriate cell that will ensure the service continuity and quality of service (QoS). Particularly, the UE (110) measurement report configuration comprises the reporting criteria e.g. whether it is periodic or event triggered, as well as the measurement information that the UE (110) has to report.

In one exemplary example, the configuration parameters received by the UE (110) received from the base station (102) is the "s-measure" parameter. Particularly, it indicates the UE (110) when to start measuring neighbour cells (106a, 106b... 106n). If a measured Reference Signal Received Power (RSRP) of the serving cell (104) falls below the s-measure, it indicates that the signal of the UE (110) from the serving cell (104) is below threshold (weak), and the UE (110) may initiates the measuring the signal strength of reference signals from the neighbour cells (106a, 106b... 106n). The configuration parameters to the UE (110) are provided during the RRC (Radio Resource Control) configuration and/or RRC re-configuration.

The s-measure determines when the UE (110) starts measuring the neighbour cells (106a, 106b... 106n), there are several other measurement configuration parameters that specify the triggering of handover measurement reports from the UE (110). One of such and most common triggered criteria includes "Event A3": Neighbour cell, e.g. cell (106a) or (106b), becomes better than an offset relative to the serving cell (104). The offset values are known as cell indication offset (CIO) defined by the network for each cell and communicated to the UE (110) as one of the measurement configuration parameters (also referred as handover parameters, herein) along with signal strength metrics (Reference Signals Received Power (RSRP)/Reference Signal Received Quality (RSRQ)), hysteresis metrics, and the like.

In case of the condition (known in the art) satisfying for the event A3 remains valid for a certain duration known as Time to Trigger (TTT), the UE sends the measurement report to the serving base station (102). The real-time evaluation of the HO parameters and real time HO using an open-radio access network (O-RAN) architecture is executed in parallel, as described below in greater detail.

In "conventional" HO mechanism, the base station (102) determines the handover requirement by identifying load of the serving cell (104) and target cells (106a, 106b... 106n) to perform the handover i.e., based on load values or received power individually. Moreover, according to "conventional" mechanism, change in HO parameters and load comparison for determining the HO requirement are executed sequentially (in any order) which may result in performing the HO of the UE (110) to an inaccurate/incorrect neighbour cell (106a or 106b) and further incurring delay during the HO. Unlike conventional HO mechanism, the proposed HO mechanism provides an intelligent and coordinated parallel processing for handover requirements or stepwise adjustment. That is, the proposed HO mechanism enables the base station (102) (in the O-RAN architecture) to perform a parallel execution of comparing the load changing of parameters together for all the neighbor's cells (106a, 106b... 106n) of the serving cell (104).

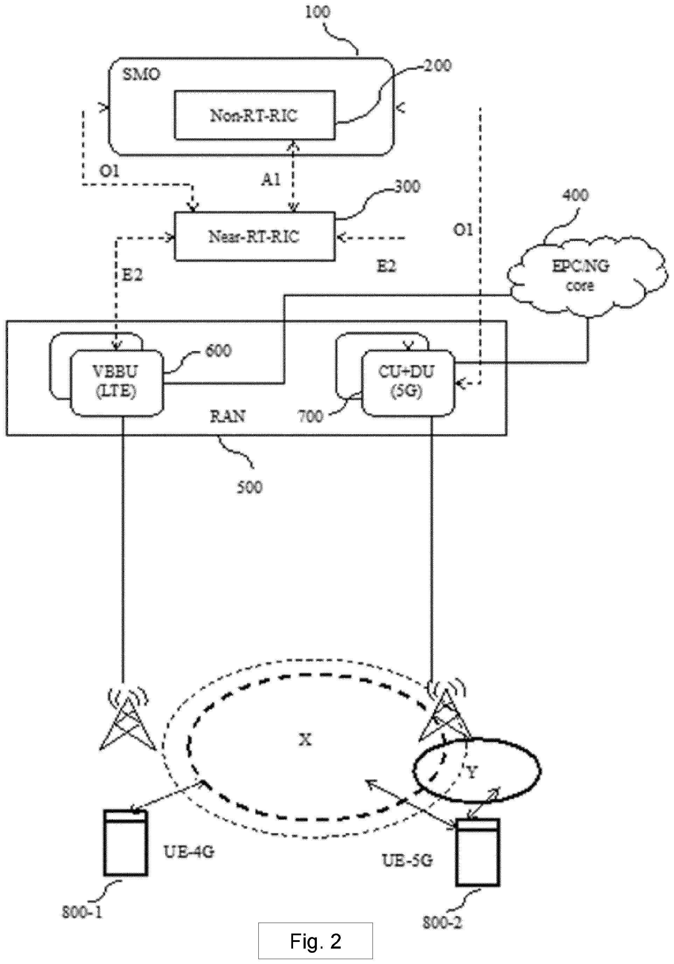

Fig. 2 is a block diagram illustrating an overview of an Open-Radio Access Network (O-RAN) architecture in conjunction with the wireless network in accordance with an embodiment of the present disclosure. The Open-Radio Access Network (O-RAN) architecture (200) includes a Service Management and Orchestration (SMO) framework (202) and a radio access network (RAN) intelligent controller (RIC) (210) connected to a RAN (208). In particular, the O-RAN is an evolved version of prior radio access networks, making the prior radio access networks more open and smarter than previous generations. Moreover, the O-RAN provides real-time analytics that drive embedded machine learning systems and artificial intelligence back end modules to empower network intelligence. Further, the O-RAN includes virtualized network elements with open and standardized interfaces. The open interfaces enable smaller vendors and operators to quickly introduce their own services, or enables operators to customize the network to suit their own unique needs, or enable multi vendor deployments, or enables a more competitive and vibrant supplier ecosystem. Further, the O-RAN introduces a self-driving network by utilizing new learning based technologies to automate operational network functions. Subsequently, embedded intelligence, applied at both component and network levels, enables dynamic local radio resource allocation and optimizes network wide efficiency. In combination with O-RAN's open interfaces, AI-optimized closed-loop automation is a new era for network operations.

In accordance with an embodiment of the present disclosure, the Service Management and Orchestration (SMO) framework (202) is configured to provide SMO functions/services such as data collection and provisioning services of the Radio access network (RAN) (208). The SMO or Service Management and Orchestration Framework is responsible for the management and orchestration of the managed elements under its span of control. The framework may be a third-party Network Management System (NMS) or orchestration platform. Further Service Management and Orchestration Framework provide an integration fabric and data services for the managed functions. The integration fabric enables interoperation and communication between managed functions within the O-RAN domain. Data services provide efficient data collection, storage and movement capabilities for the managed functions.

In an implementation, multiple OAM architecture together with RAN service modeling, the modeling of different OAM deployment options and OAM services (integration fabric etc.) are supported by SMO. The Radio access network (RAN) (208) may implement a single radio access technology (RAT) (4G/5G) or multiple RATs (4G and 5G) using the base stations (106, 106a, 106b, 106c... 106n) located in the wireless communication network (100). The data collection of the Service Management and Orchestration (SMO) framework (202) includes data related to the bandwidth of the wireless communication network (100) and the User Equipment (UE) (110).

In accordance with an embodiment of the present disclosure, the base stations (106, 106a, 106b, 106c..106n) may be a Radio Base Station (RBS), evolved Node B ("eNB"), "eNodeB", "NodeB", "B node", gNB, or BTS (Base Transceiver Station). In particular, the base stations (106, 106a, 106b, 106c..106n) handle transmission and reception of signals associated with the plurality of cells. The base station (106) connects with the neighbour base stations (106a, 106b, 106c..106n) via "Xn" interface either in a same network or to a network node of another network (intra-network). Moreover, each base station (106, 106a, 106b, 106c..106n) connects to one or more antennas and communicates with the core network (not shown) comprising an evolved packet core (EPC) using an "S1" interface. Further, the base stations (106, 106a, 106b, 106c..106n) communicates with a Mobility Management Entity (MME) and a User plane entity (UPE) identified as Serving Gateway (S-GW) using S1-C and S1-U for control plane and user plane, respectively. In an alternate aspect, the core network may be a 5G core network.

The Radio access network (RAN) intelligent controller (RIC) (210) is a non-real-time-radio intelligent controller (Non-RT-RIC) (204) and a near-real-time-radio intelligent controller (Near-RT-RIC) (206). The Non-real-time-radio intelligent controller (Non-RT-RIC) (204) supports intelligent RAN optimization in non-real-time and leverages the SMO services. The Radio access network (RAN) (208) is configured within the O-RAN computing environment and/or Open-Radio Access Network (O-RAN) architecture (200) for leveraging the intellectualization ("Artificial intelligence (AI)/Machine Learning (ML)) of the Non-real-time-radio intelligent controller (Non-RT-RIC) (204) and the Near-real-time-radio intelligent controller (Near-RT-RIC) (206).

The Near-real-time-radio intelligent controller (Near-RT-RIC) (206) hosts a plurality of xApps, for example, target cell selection-xApp that is configured to select a best candidate cell i.e., target cell, from a plurality of candidate cells for performing the handover. In particular, the xApps at the Near-real-time-radio intelligent controller (Near-RT-RIC) (206) are known as RApps. The RApps uses an "E2" interface to collect near real-time Radio access network (RAN) (208) information and to provide value added services using the primitives guided by the policies/configuration. Further, the enrichment data is provided by the "A1" interface from the rApps at the Non-real-time-radio intelligent controller (Non-RT-RIC) (204). The "O1" interface collects data for training in the Non-real-time-radio intelligent controller (Non-RT-RIC) (204) (integrated with Service Management and Orchestration (SMO) framework (202).

In one exemplary example, the "E2" and "A1" interfaces exchange control messages, subscription messages, real-time measurements, policy trigger messages, indication messages, machine learning (ML) management and enrichment information types of messages, and the like. Particularly, the real-time measurements include RSRP/RSRQ measurements, channel quality measurements and the like. And, the subscription messages are limited-time RSRP/RSRQ subscription messages, limited-time A3 event subscription messages and the like. Further, the policy trigger messages include spectrum allocation policies, radio assignment policies, and the like.

In accordance with an embodiment of the present disclosure, the O-RAN architecture (200) includes a virtualized network architecture having at least one RAN controller. The RAN (208), further includes at least one RAN controller, configured to control a plurality of user equipments (UEs) (110) positioned in the serving cell (104) i.e., cell covering a location for serving the UE (110), the serving cell (104) is adjacent to a plurality of neighbour cells (106a, 106b, ...106n) via an E2 node. Particularly, the E2 node is at least one of: an evolved Node B (eNBs) (102), a next generation Node-B (gNBs) (108a), and CU/DU (108b). Moreover, CU may be a centralized unit and DU may be a distributed unit. Further, the RAN controller (302) is connected with a plurality of E2 nodes (102) (108a) (108b) and the plurality of E2 nodes (102) (108a) (108b) may be connected with a plurality of user equipments (110).

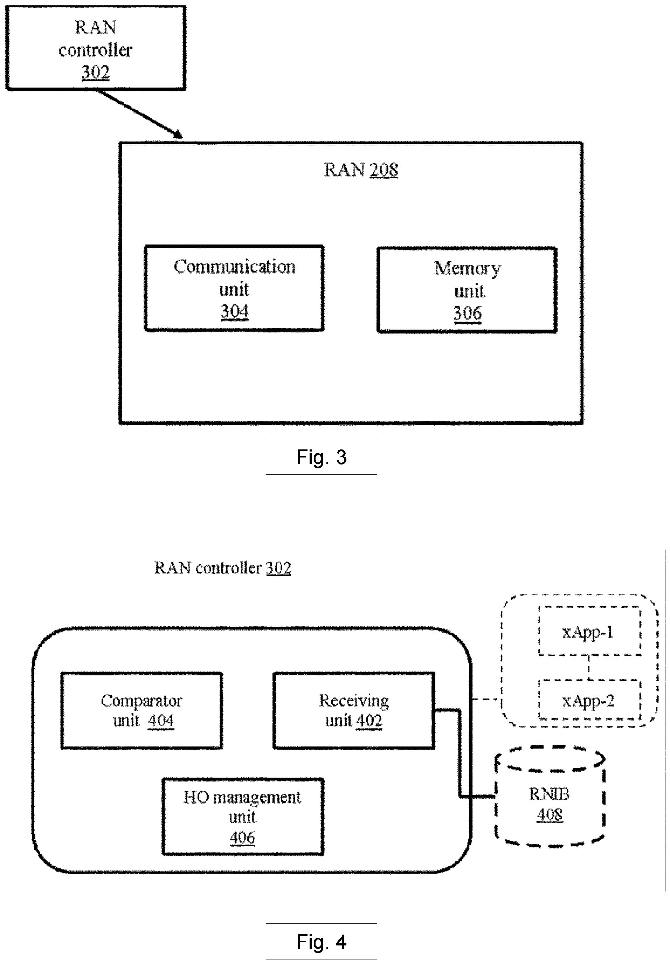

Fig. 3 is a block diagram illustrating various hardware elements in a RAN in accordance with an embodiment of the present disclosure. The Radio access network (RAN) (208) includes a communication unit (304), and a memory unit (306). In particular, the Radio access network (RAN) (208) is connected to the Radio access network (RAN) controller (302) which may be implemented as one or more processors, microprocessors, microcomputers, microcontrollers, digital signal processors, central processing units, state machines, logic circuitries, and/or any devices that manipulate signals based on operational instructions. In some implementations, the Radio access network (RAN) controller (302) resides outside the Radio access network (RAN) (208). Alternatively, the Radio access network (RAN) (208) includes the Radio access network (RAN) controller (302). Further, the Radio access network (RAN) controller (302) is configured to fetch and execute computer-readable instructions stored in the memory unit (306).

In an exemplary example, the Radio access network (RAN) controller (302) is implemented by the Radio access network (RAN) intelligent controller (RIC) (210) i.e., xApps at the Near-real-time-radio intelligent controller (Near-RT-RIC) (206) or xApps at the Non-real-time-radio intelligent controller (Non-RT-RIC) (204).

In accordance with an embodiment of the present disclosure, the communication unit (304) include interface(s) for example, a web interface, a Graphical User Interface (GUI), a Command Line Interface (CLI) or "E2", "O1", "X2", "S1" and the like. The communication unit (304) is used for configuring the base station (106).

In accordance with an embodiment of the present disclosure, the base station (106) serving as a source base station (BS) is referred as the serving base station (106) and the base stations (106a, 106b, 106c... 106n) serving the candidate base stations for the selection of the target base station (for e.g., 106a) are referred to as target BS (106a). Particularly, the handover request occurs when the quality of the communication between the User Equipment (UE) (108) and the serving BS (106) falls below threshold set by the corresponding network operator. The weak communication may be due to variations in channel quality, signal strengths, or the like, which causes the User Equipment (UE) (108) to leave the serving cell (104) served by the serving BS (106) and entering in to a new cell (i.e., for e.g., 104a or 104b or 104c).

In one aspect of the disclosure, the handover is controlled by the serving BS (106). Alternatively, the handover is controlled by the E2 node, for example, eNodeB and gNodeB. When the User Equipment (UE) (108) initiates the handover then a UE-assisted handover may be performed. If the serving BS (106) initiates the handover, a network-controlled handover is performed. Further, in an example, the serving BS (106) is the base station which is currently serving the UE. In another example, the serving BS may be the E2 node currently serving the UE.

In accordance with an embodiment of the present disclosure, the E2 node is an O-RAN node and is connected to the near-RT-RIC via an E2 interface. The E2 node includes a centralized unit (CU), a distributed unit (DU) and a radio unit (RU). And, the E2 nodes connect with a plurality of UEs at one end and the near-RT-RIC at the other end.

The memory unit (306) may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

FIG. 4 is a block diagram illustrating various hardware elements in a RAN controller in accordance with an embodiment of the present disclosure. The Radio access network (RAN) controller (302) includes a receiving unit (402), a comparator unit (404), a HO management unit (406), and a radio network information base (RNIB) (408).

In accordance with an embodiment of the present disclosure, the receiving unit (402) is configured to receive various types of data and control plane information from the wireless communication system (100). Particularly, the receiving unit (402) receives information such as measurements for data, and/or control information for the Radio access network (RAN) (208). The received information is utilized by the Radio access network (RAN) controller (302) to make a determination as to whether to trigger the handover process from the serving base station (106) to the target base station (106a).

In accordance with an embodiment of the present disclosure, the receiving unit (402) is configured to receive measurement reports (MRs) for cell load measurements. In particular, the measurement reports (MRs) comprise resource load metrics, old/existing/ CIO values, and the like, obtained from the RNIB (408). Moreover, the RNIB (408) is a storage unit for old/existing/new CIOs along with corresponding resource load metrics of the serving cell (104) and each of neighbour cells (106a-b) reported by the RAN (208) using the E2 interface. Further, the RNIB (408) is configured to be located within the Near-RT-RIC (206) or may be externally placed at a server (not shown) and communicate with the Near-RT-RIC (206) using one or more known network interfaces. The resource load metrics may include cell utilization values such as Physical Resource Blocks (PRBs) usage (PRBs used and unused values). And, the PRBs are allocated by the MAC scheduler during the resource allocation procedure.

Further, the receiving unit (402) is configured to periodically obtain a serving cell load parameter and a plurality of neighbour cell load parameters. In some implementations, the serving cell load parameter is an average load of the serving cell (104). Alternatively, the average load may include a value indicating the number of physical resource blocks (PRBs) used (i.e., PRB utilization). The serving cell is the cell location which is currently serving the UE. The neighbor cells are all the cells which are adjacent to the serving cell. The serving cell handover parameter includes serving cell CIO (cell individual offset) value with respect to a neighboring cell. The neighboring cell handover parameter for a neighboring cell includes neighboring cell CIO value with respect to the serving cell. The CIO value is an offset value with the neighbor's measurement value used for taking handover related decisions. A negative CIO value of a serving cell with respect to a neighbor cell may show that the neighbor cell has weaker possibility to provide HO (handover) with that neighbor cell. Similarly, a positive CIO value of the serving cell with respect to the neighbor cell may show that the neighbor cell has a high possibility of handover with the neighbor cell.

In accordance with an embodiment of the present disclosure, the comparator unit (404) is configured to periodically compare the serving cell load parameter, of the serving cell (104) with each of the plurality of neighbour cell load parameters, of each of the neighbour cells (106a/106b... 106n) from the plurality of neighbour cells (106a, 106b, ...106n). In some implementations, both the serving cell load parameter and the plurality of neighbour cell load parameters indicate the plurality of cell load parameters.

In accordance with an embodiment of the present disclosure, the comparator unit (404) is also configured to compare the serving cell load parameter with a predefined threshold in order for the HO management unit (406) to determine whether the handover is required by the UE (110). If the serving cell handover parameter is less than the predefined threshold, then the HO of the UE (110) for MLB (mobile load balancing) purpose is not required. For example, the predefined threshold may be a resource load criterion indicating the PRB utilization value of the serving cell (104).

In some exemplary example, the comparator unit (404) compares if the serving cell load parameter is greater than any of the plurality of neighbour cell handover parameters. And, if the serving cell load parameter is less than each of the plurality of neighbour cell handover parameters, then the handover parameter adjustment is not performed. The handover parameter adjustment may be an update of CIO values.

In another example, UE (110) is configured to check if a predefined handover inequality is satisfied for a specific interval of time. The predefined handover inequality is

$$RSRPt > RSRPs + (Hs - CIOs,t),$$

where

Hs is the hysteresis parameter for the serving cell (104),

RSRPt is a received signal strength measure of the each neighbour cell (106a/106b... 106n),

RSRPs is a received signal strength of the serving cell (104),

CIOs,t is a cell individual offset measure of the serving cell (104) with respect to one of the neighbour cells (106a/106b... 106n).

In accordance with an embodiment of the present disclosure, the HO management unit (406) is configured to periodically calculate the serving cell handover parameter and a plurality of neighbour cell handover parameters of each of the neighbour cell (106a/106b... 106n) from the plurality of neighbour cells (106a, 106b, ... 106n). Further, the HO management unit (406) dynamically updates the serving cell handover parameter and the plurality of neighbour cell handover parameters based on the comparison.

In some implementations, the HO management unit (406) is communicatively coupled with the comparator unit (404) to update the CIO value of the serving cell (104). And, the comparator unit (404) determines the CIO value of each of the neighbour cells (106a/106b... 106n) in response to periodically comparing the serving cell load parameter with each of the plurality of neighbour cell load parameters. Alternatively, the CIO values that are updated are related to dynamic updating of the serving cell handover parameter (i.e., cell handover parameter includes the CIO values). Thus, the CIO values are changed continuously, after comparing load parameters.

Furthermore, the HO management unit (406) is configured to determine if the handover is required by the UE (110) to one of the neighbour cells (106a/106b... 106n) from the plurality of neighbour cells (106a, 106b,106n) based on updated serving cell handover parameter and the plurality of neighbour cell handover parameters. In particular, the updated serving cell handover parameter and the plurality of neighbour cell handover parameters comprises updated CIO value of the serving cell (104) and the updated CIO value of each of the neighbour cells (106a/106b... 106n). The CIO value measures the handover trigger for the UE (110) from the serving cell (104) to each of the neighbouring cells (106a/106b... 106n).

In some implementations of the present disclosure, a fast and efficient HO mechanism in that aforementioned operations of each of the component of the RAN controller (302) are executed parallelly on each of the neighbour cells (106a/106b... 106n) from the plurality of neighbour cells (106a, 106b, 106n).

In accordance with an embodiment of the present disclosure, the HO management unit (406), in order to dynamically update the HO parameters changes a serving cell CIO with respect to each of a neighbour cell CIO and change the neighbour cell CIO with respect to the serving cell CIO.

Once the HO parameters are updated, the communication unit (304) transmit the plurality of handover parameters to the serving node (102), the serving node is connected to the UE (110). In particular, the handover parameters are updated at a second predefined time interval, where both the serving cell handover parameter and the plurality of neighbour cell handover parameters indicates the plurality of handover parameters.

The aforementioned operations of the RAN controller (302) are repeated after a first predefined time interval. Hence, by virtue of the parallel operations and the recurrent operations of the RAN controller (302) as detailed above, the Quality of Experience (QoE) and the MLB are improved. Particularly, the predefined time-interval (first and second) may be, for example, defined as a value in the 10-15 seconds range. In another example, the pre-defined time-interval may be defined by the network operator.

The components of the RAN controller (302) may be implemented using one or more application-specific integrated circuits (ASICs) adapted to perform some or all of the applicable functions in hardware. Alternatively, the functions may be performed by one or more other processing units (or cores), on one or more integrated circuits. In other examples, other types of integrated circuits may be used (e.g., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

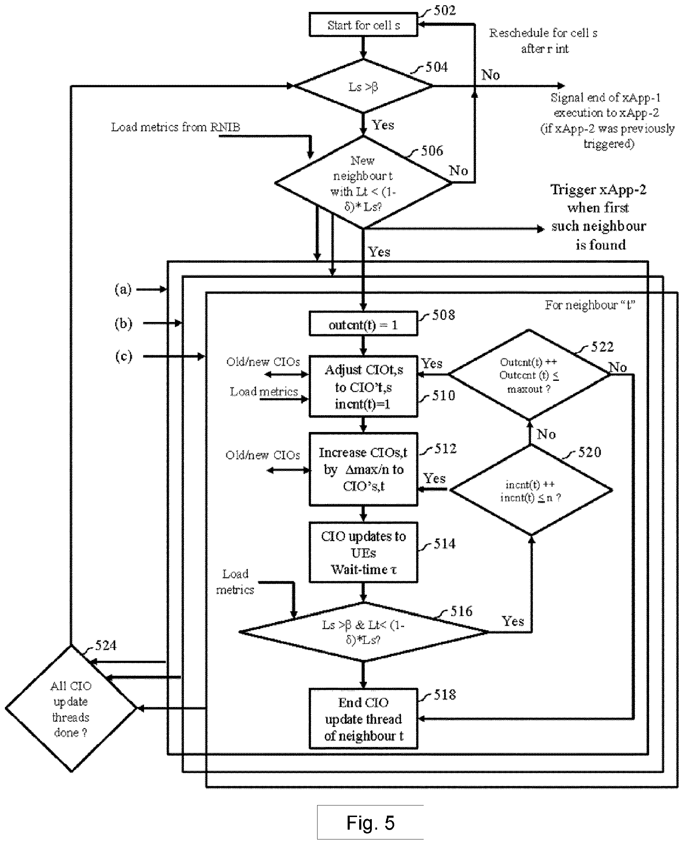

Fig. 5 is a flow chart illustrating a method for updating CIO or handover parameters in accordance with an embodiment of the present disclosure. The operations are performed by the RAN controller.

At step 502, the HO management unit (406) is configured to initiate the load determination at the serving cell (104) (represented as "s").

At step 504, the HO management unit (406) is configured to determine if the load of the serving cell (104) (also referred as $L_s$) is greater than a threshold parameter $\beta$. The parameter $\beta$ represents the need for changing the CIO parameter for handing over between the serving cell (104) and each of the neighbour cells (106a, 106b, ...106n), as a function of the loading at the serving cell (104) and each of the neighbour cells (106a, 106b, ... 106n). In case, if the load of the serving cell (104), is less than the threshold parameter $\beta$ (i.e., $L_s<\beta$), then the HO management unit (406) may terminate the CIO update process..

In case, if the load of the serving cell (104), is greater than the proportionality factor $\beta$ (i.e., $L_s>\beta$), then the HO management unit (406) is configured to (concurrently/parallely on multiple threads (a)-(c), where each thread is associated with each neighbour cells (106a, 106b, ... 106n)) determine, at step 506, whether the load of each of the neighbour cells (106a, 106b, ...106n) and the serving cell (104) meets the loading threshold criterion. That is ($L_t < (1-\delta)*L_s$), where $L_t$ is load of each of the neighbour cells (106a-b) and a threshold $\delta$ is a margin. In one example, the threshold $\delta$ is the hysteresis margin for preventing small fluctuations in the relative loading between the cells from causing the CIO value to oscillate. Accordingly, appropriate values for $\delta$ may be determined from statistical analysis of historical data and/or obtained from RNIB (408). The average load values for each of the neighbour cells (106a, 106b, ... 106n) and the serving cell (104) may be obtained from the RNIB (408).

In case, at step 506, the load of each of the neighbour cells (106a, 106b, ...106n) and the serving cell (104) fails to meet the resource load threshold criterion i.e., ($L_t >(1-\delta)*L_s$) then the HO management unit (406) may terminate the load determination process for the neighbor cell t and look for another neighbor cell satisfying the loading conditions.

At step 506, the load of each of the neighbour cells (106a, 106b, ...106n) and the serving cell (104) meets the resource load threshold criterion i.e., ($L_t <(1-\delta)*L_s$). then the HO management unit (406) concurrently updates/adjusts, at steps 508-512.

At step 508-512, repeated adjustment of CIO for t with respect to s is done in the "outer loop" under the control of the local variable "outcnt", and nested in "outer loop", repeated adjustment of CIO for s with respect to t is done in the "inner loop" under the control of the local variable "incnt". the CIO values of each such neighbour cells (106a, 106b, ...106n). The average load values and old/existing CIOs values are obtained, from the RNIB (408), and are utilized by the HO management unit (406).

At step 514, the communication unit (304) sends the updated HO parameters comprising the new CIO values to the UE (110). In one example, new CIOs are stored at the RNIB (408) and also transmitted to the UE (110) with a wait period of 1-2 seconds (i.e., second predefined time interval)..

At step 516, the HO management unit (406) may be configured to determine if the load of the serving cell (104) meets the conditions $L_s > \beta$ & $L_t < (1-\delta)*Ls$.

In one embodiment, if the determination is "NO" and the conditions are not met then 516 proceeds to 518.

At step 518, HO management unit (406) terminates the CIO update process for the neighbor cell t (106a, 106b, ...106n).

In another embodiment, if the determination is "YES" and the if the load of the serving cell (104) meets the criteria $Ls > \beta$ & $Lt < (1-\delta) *Ls$, then the HO management unit (406) may be configured to update.

At steps 520-522, the CIOs for each of the neighbour cells (106a, 106b, ...106n) are updated.

At step 524, the HO management unit (406) determines if all the CIO values for each of the neighbouring cells (106a, 106b, ... 106n) (executed parallely on multiple threads (a)-(c)) are completed.

If the determination is "yes", then the HO management unit (406) initiates/repeats the operations of steps 504-522.

After a pre-configured time period (10-15 seconds) (i.e., the first predefined time interval) the RAN controller (302) reinitiate the operations, as detailed, at the next instance for the cell "s" using the aforementioned steps (502-524) and further for a neighbor cell t. Thereby, ensuring continuous monitoring for each cell and its neighbour cells for their load conditions. The parallel execution of the aforementioned steps (502-524) for the neighbour cells includes parallel CIO updating for each other neighbour cell and following the pre-configured time intervals. Thus, by changing CIO values of the serving cell (104) with respect to each of the neighbour cells (106a, 106b, ... 106n) in a gradually incremental manner (stepwise adjustment), after checking load on the serving cell (104) and the neighbour cells (106a, 106b, ...106n) on specific time interval cycle, as described above in steps (502-524).

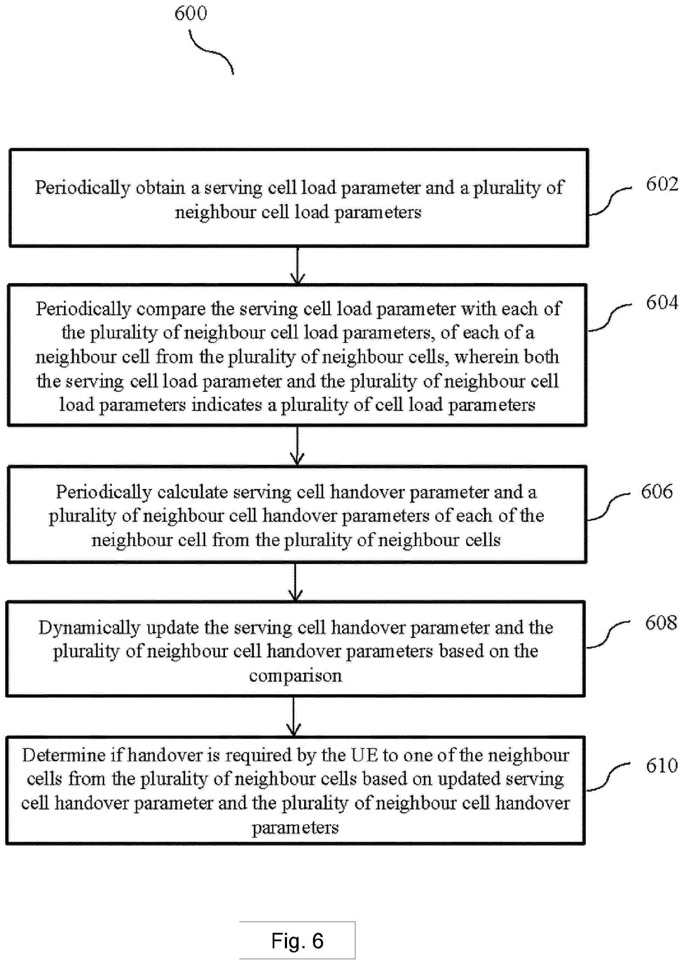

Fig 6 is a flow chart (600) illustrating a method for parallel identification of HO requirements in the O-RAN environment (200). The operations (602-610) are performed by the RAN controller (302).

At step 602, the serving cell load parameter and the plurality of neighbour cell load parameters are periodically obtained .

At step 604, the serving cell load parameter of the serving cell (104) are periodically compared with each of the plurality of neighbour cell load parameters of each of the neighbour cell (106a/106b... 106n) from the plurality of neighbour cells (106a, 106b, ...106n). In particular, both the serving cell load parameter and the plurality of neighbour cell load parameters indicates the plurality of cell load parameters.

At step 606, the serving cell handover parameter and a plurality of neighbour cell handover parameters of each of the neighbour cell (106a/106b... 106n) from the plurality of neighbour cells (106a, 106b, ... 106n) are periodically calculated.

At step 608, the serving cell handover parameter and the plurality of neighbour cell handover parameters are dynamically updated based on the comparison.

At step 610, a determining is made if the handover is required by the UE (110) to one of the neighbour cells (106a/106b... 106n) from the plurality of neighbour cells (106a, 106b, ...106n) based on updated serving cell handover parameter and the plurality of neighbour cell handover parameters. In particular, the RAN controller (302) provides the updated serving cell handover parameter and the plurality of neighbour cell handover parameters to the UE (110). Moreover, the RAN controller (302) determine, via the UE, if the handover is required by the UE (110) to one of the neighbour cells (106a/106b... 106n) from the plurality of neighbour cells (106a, 106b, ... 106n) based on updated serving cell handover parameter and the plurality of neighbour cell handover parameters. Further, the UE (110) checks triggering of A3 event to determine if handover is required by the UE from the serving cell (102) to one of the neighbour cells (106a/106b... 106n) from the plurality of neighbour cells (106a, 106b, ... 106n).

Overall, the present disclosure also aims at reducing the ping-pong effect during the HO, thereby increasing the quality of the mobile user's connection and reducing the numbers of handovers (by effective determination of HO requirements) which in turn decreases the network load and improves the network performance. Moreover, the parallel execution of the operations, as detailed above, increases the efficiency of the HO and achieves improved mobile load balancing (MLB).

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1.   A method for identifying handover requirement by a Radio access network (RAN) controller (302) in an open-RAN (O-RAN) environment (200) to update handover parameters **characterized in that** steps of:

   periodically obtaining a serving cell load parameter and a plurality of neighbour cell load parameters; wherein the serving cell load parameter and the plurality of neighbour cell load parameters indicates a plurality of cell load parameters;
   periodically comparing the serving cell load parameter with each of the plurality of neighbour; cell load parameters of each neighbour cell from the plurality of neighbour cells (106a, 106b... 106n);
   periodically calculating serving cell handover parameter and a plurality of neighbour cell handover parameters of each of the neighbour cell from the plurality of neighbour cells (106a, 106b... 106n);
   dynamically updating the serving cell handover parameter and the plurality of neighbour cell handover parameters based on comparison; and
   determining if handover is required by the UE (110) to any of the plurality of neighbour cells (106a, 106b... 106n) based on updated serving cell handover parameter and the plurality of neighbour cell handover parameters;

   wherein periodically obtaining, periodically comparing, periodically calculating, dynamically updating and determining of the handover requirement are parallelly executed after a first predefined time interval.

2.   The method as claimed in claim 1, wherein if the handover is required by the UE (110) in the serving cell (104) is further determined by:

   comparing the serving cell load parameter with a predefined threshold and determining whether the serving cell handover parameter is less than the predefined threshold; or
   comparing the serving cell load parameter with the plurality of neighbour cell handover parameter and determining if the serving cell load parameter is greater than each of the plurality of neighbour cell handover parameter; and wherein the handover is not required when the serving cell handover parameter is less than the predefined threshold or when the serving cell load parameter is less than each of the plurality of neighbour cell handover parameters.

3.   The method as claimed in claim 1 or claim 2, wherein the plurality of cell load parameters are dynamically updated by changing a serving cell CIO for each of a neighbour cell and the neighbour cell CIO with respect to the serving cell wherein a CIO value determines the handover trigger for the UE from the serving cell (104) to each of the neighbour cells (106a/106b.../106n).

4.   The method as claimed in any preceding claim, wherein the serving cell handover parameter and the plurality of neighbour cell handover parameters are updated in response to periodically comparing the serving cell load parameter with each of the plurality of neighbour cell load parameters, repeatedly updating a cell individual offset (CIO) value of the serving cell and a CIO value of each of the neighbour cell (106a/106b.../106n).

5.   The method as claimed in any preceding claim, wherein the serving cell (102) and neighbor cell (106a, 106b... 106n) load parameters correspond to average load values of the serving cell (102) and neighbor cell (106a, 106b... 106n).

6. The method as claimed in any preceding claim, wherein the method checks at the UE (110), if a predefined handover inequality is satisfied for a specific interval of time.

7. The method as claimed in any preceding claim, wherein the method further receives load values of the serving cell and each of the neighbour cells (106a, 106b... 106n) from a radio network information base (RNIB) (408) and wherein the load values comprises a physical resource block (PRB) utilization value.

8. The method as claimed in any preceding claim, wherein the method further comprises transmitting a plurality of handover parameters to the serving E2 node (102) operably connected to the UE (110).

9. The method as claimed in any preceding claim, wherein the handover parameters are transmitted at a second predefined time interval.

10. A Radio access network (RAN) controller (302) for identifying handover requirement in open RAN (O-RAN) environment (200) characterized to:

   periodically obtain a serving cell load parameter and a plurality of neighbour cell load parameters;
   periodically compare the serving cell load parameter with each of the plurality of neighbour cell load parameters, of each of a neighbour cell (106a/106b.../106n) from the plurality of neighbour cells (106a, 106b... 106n), wherein both the serving cell load parameter and the plurality of neighbour cell load parameters indicates a plurality of cell load parameters;
   periodically calculate serving cell handover parameter and a plurality of neighbour cell handover parameters of each of the neighbour cell (106a/106b.../106n) from the plurality of neighbour cells (106a, 106b... 106n);
   dynamically update the serving cell handover parameter and the plurality of neighbour cell handover parameters based on the comparison; and
   determine if handover is required by the UE (110) to one of the neighbour cells from the plurality of neighbour cells (106a, 106b... 106n) based on updated serving cell handover parameter and the plurality of neighbour cell handover parameters;

   wherein the RAN controller (302) is connected with a plurality of E2 nodes, and the plurality of E2 nodes are connected with a plurality of user equipment (UEs) (110) positioned in a serving cell (104), a cell covering a location for serving a UE (110), the serving cell (104) is adjacent to a plurality of neighbour cells (106a, 106b... 106n).

11. The RAN controller (302) as claimed in claim 10, wherein the RAN controller (302) configured to update serving cell handover parameter and the plurality of neighbour cell handover parameters to the UE (110), and
determine via the UE, if the handover is required by the UE (110) in the serving cell (104), wherein determination is made by:

   comparing the serving cell load parameter with a first predefined threshold and determining that the handover is not required if the serving cell handover parameter is less than the first predefined threshold; or
   comparing if the serving cell load parameter is greater than each of the plurality of neighbour cell handover parameters and determining that the handover is not required if the serving cell load parameter is less than each of the plurality of neighbour cell handover parameters;

wherein the serving cell (102) and neighbor cell (106a, 106b... 106n) load parameters correspond to average load values of the serving cell (102) and neighbor cell (106a, 106b... 106n).

12. The RAN controller (302) as claimed in claim 10 or claim 11, wherein the RAN controller (302) checks if a predefined handover inequality is satisfied for a specific interval of time, wherein the predefined handover inequality is $RSRP_t > RSRP_s + (H_s - CIO_{s,t})$.

13. The RAN controller (302) as claimed in any of claims 10 to 12, wherein the RAN controller (302) changes a serving cell CIO with respect to each of a neighbour cell and the neighbour cell CIO with respect to the serving cell, wherein a CIO value determines a handover trigger for the UE from the serving cell (104) to each of the neighbour cell (106a/106b.../106n)

14. The RAN controller (302) as claimed in any of claims 10 to 13, wherein the RAN controller (302) receives the serving cell load value and the neighbour cell load value for each of the plurality of neighbour cells from a radio network information base (RNIB) (408) storing load values of the serving cell and each of the neighbour cells (106a, 106b... 106n).

15. The RAN controller (302) as claimed in any of claims 10 to 14, wherein the RAN controller (302) parallely execute periodically obtaining, periodically comparing, periodically calculating, dynamically updating and determining of the handover requirement at a first predefined time interval and transmit a plurality of handover parameters to the serving E2 node (102) at a second predefined time interval.

Fig. 1

Fig. 2

RAN
controller
302

RAN 208

Communication
unit
304

Memory
unit
306

Fig. 3

RAN controller 302

xApp-1

Comparator
unit 404

Receiving
unit 402

xApp-2

HO management
unit
406

RNIB
408

Fig. 4

Fig. 5

600

| | |
|---|---|
| Periodically obtain a serving cell load parameter and a plurality of neighbour cell load parameters | 602 |

↓

| | |
|---|---|
| Periodically compare the serving cell load parameter with each of the plurality of neighbour cell load parameters, of each of a neighbour cell from the plurality of neighbour cells, wherein both the serving cell load parameter and the plurality of neighbour cell load parameters indicates a plurality of cell load parameters | 604 |

↓

| | |
|---|---|
| Periodically calculate serving cell handover parameter and a plurality of neighbour cell handover parameters of each of the neighbour cell from the plurality of neighbour cells | 606 |

↓

| | |
|---|---|
| Dynamically update the serving cell handover parameter and the plurality of neighbour cell handover parameters based on the comparison | 608 |

↓

| | |
|---|---|
| Determine if handover is required by the UE to one of the neighbour cells from the plurality of neighbour cells based on updated serving cell handover parameter and the plurality of neighbour cell handover parameters | 610 |

Fig. 6

Europäisches
Patentamt

European
Patent Office

Office européen
des brevets

# EUROPEAN SEARCH REPORT

Application Number

EP 21 21 8503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/242987 A1 (APPLE INC [US]) 3 December 2020 (2020-12-03) | 1,2,5, 7-11,14, 15 | INV. H04W28/08 H04W36/00 |
| Y | * paragraph [0136] – paragraph [0141] * <br> * paragraph [0153] – paragraph [0165] * <br> * paragraph [0174] – paragraph [0177] * <br> * figures 9, 10b, 11b * | 3,4,6, 12,13 | |
| Y | US 2018/054749 A1 (KIM YUN SUNG [US] ET AL) 22 February 2018 (2018-02-22) <br> * paragraph [0014] – paragraph [0016] * <br> * paragraph [0034] – paragraph [0039] * <br> * figure 4 * | 6,12 | |
| Y | US 2015/031360 A1 (CHOI JUNG-MIN [KR] ET AL) 29 January 2015 (2015-01-29) <br> * paragraph [0010] – paragraph [0012] * <br> * paragraph [0016] * | 3,4,13 | |
| A | ADDALI KHALED ET AL: "Enhanced Mobility Load Balancing Algorithm for 5G Small Cell Networks", 2019 IEEE CANADIAN CONFERENCE OF ELECTRICAL AND COMPUTER ENGINEERING (CCECE), IEEE, 5 May 2019 (2019-05-05), pages 1-5, XP033627998, DOI: 10.1109/CCECE.2019.8861598 [retrieved on 2019-10-07] <br> * paragraph I * <br> * paragraph III * <br> * figure 1 * | 1-15 | TECHNICAL FIELDS SEARCHED (IPC) <br><br> H04W |

-/--

The present search report has been drawn up for all claims

| Place of search | Date of completion of the search | Examiner |
|---|---|---|
| Munich | 7 September 2022 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 21 8503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "O-RAN: Towards an Open and Smart RAN", O-RAN ALLIANCE WHITE PAPER, 1 October 2018 (2018-10-01), pages 1-19, XP055773799, Retrieved from the Internet: URL:https://static1.squarespace.com/static/5ad774cce74940d7115044b0/t/5bc79b371905f4197055e8c6/1539808057078/O-RAN+WP+FInal+181017.pdf [retrieved on 2021-02-09] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 7 September 2022 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 21 8503**

07-09-2022

| Patent document cited in search report | | Publication date | Patent family member(s) | | Publication date |
|---|---|---|---|---|---|
| WO 2020242987 | A1 | 03-12-2020 | CN | 113875278 A | 31-12-2021 |
| | | | US | 2022159525 A1 | 19-05-2022 |
| | | | WO | 2020242987 A1 | 03-12-2020 |
| US 2018054749 | A1 | 22-02-2018 | US | 11071028 B1 | 20-07-2021 |
| | | | US | 2018054749 A1 | 22-02-2018 |
| US 2015031360 | A1 | 29-01-2015 | KR | 20150014038 A | 06-02-2015 |
| | | | US | 2015031360 A1 | 29-01-2015 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6485565 B
- EP 2420084 B1
- US 8509776 B2
- US 8830964 B2

**Non-patent literature cited in the description**

- *3GPP ETSI TS 136 214,* April 2010